(19) Europäisches Patentamt
European Patent Office
Office européen des brevets

(11) **EP 4 549 076 A2**

(12) **EUROPEAN PATENT APPLICATION**

(43) Date of publication:
**07.05.2025 Bulletin 2025/19**

(21) Application number: **25163813.6**

(22) Date of filing: **19.04.2021**

(51) International Patent Classification (IPC):
**B23K 26/364** (2014.01)   **C03B 33/033** (2006.01)
**C03B 33/09** (2006.01)   **B32B 1/00** (2024.01)
**B23K 26/53** (2014.01)   **C03B 33/02** (2006.01)
**C03B 33/07** (2006.01)

(52) Cooperative Patent Classification (CPC):
**C03B 33/074; B23K 26/364; B23K 26/53;
C03B 33/0222; C03B 33/033; C03B 33/09**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.09.2020 JP 2020149235**

(62) Document number(s) of the earlier application(s) in
accordance with Art. 76 EPC:
**21863883.1 / 4 209 302**

(71) Applicant: **Nitto Denko Corporation
Ibaraki-shi, Osaka 567-8680 (JP)**

(72) Inventors:
• **KANNO, Toshihiro
Ibaraki-shi, Osaka, 567-8680 (JP)**
• **HIRATA, Satoshi
Ibaraki-shi, Osaka, 567-8680 (JP)**
• **NAKAI, Kota
Ibaraki-shi, Osaka, 567-8680 (JP)**
• **MURASHIGE, Takeshi
Ibaraki-shi, Osaka, 567-8680 (JP)**
• **INAGAKI, Junichi
Ibaraki-shi, Osaka, 567-8680 (JP)**

(74) Representative: **Hoffmann Eitle
Patent- und Rechtsanwälte PartmbB
Arabellastraße 30
81925 München (DE)**

Remarks:
This application was filed on 14-03-2025 as a
divisional application to the application mentioned
under INID code 62.

(54) **METHOD FOR DIVIDING COMPOSITE MATERIAL AND COMPOSITE MATERIAL**

(57)     There is provided a method and the like capable of dividing a composite material without making cracks appear on end faces of its brittle material layer subjected to the division and without making end faces of its resin layer subjected to the division suffer serious thermal degradation and capable of providing the composite material subjected to the division with a sufficient bending strength. The present invention provides a method for dividing a composite material 10 including a brittle material layer 1 and a resin layer 2 that are laminated together, the method includes: a resin removing step of applying laser light L1 oscillated from a $CO_2$ laser light source 20 to the resin layer along a planned division line DL of the composite material, so that a processed groove 24 is formed along the planned division line; and a brittle material removing step of applying, after the resin removing step, laser light L2 oscillated from an ultrashort pulsed laser light source 30 to the brittle material layer along the planned division line, so that processed marks 11 are formed along the planned division line. The processed marks formed in the brittle material removing step open on the resin layer side and do not penetrate through the brittle material layer.

Figure 1A

Figure 1B

Figure 1C

EP 4 549 076 A2

**Description**

[Technical Field]

The present invention relates to a composite material (composite material piece) that can be provided by a method for dividing a composite material including a brittle material layer and a resin layer that are laminated together. In particular, the present invention relates to a composite material that can be provided by the method capable of dividing a composite material without making no cracks appear on end faces of its brittle material layer subjected to the division and without making end faces of its resin layer subjected to the division suffer serious thermal degradation and capable of providing the composite material subjected to the division with a sufficient bending strength.

[Background Art]

On an outermost surface side of an image display used in a television or a personal computer, a protection material for protecting the image display is often disposed. As the protection material, a sheet glass is typically used.

However, as image displays become smaller, thinner, and lighter such as an image display used in a smartphone, a smartwatch, an on-board display, or the like, there is an increasing demand for a thin protection material that has both a protective function and an optical function. Examples of such a protection material include a composite material in which a brittle material layer having the protective function, such as a glass, and a resin layer having the optical function, such as a polarizing film, are laminated together. The composite material needs to be divided to have a prescribed shape and prescribed dimensions that are suitable for its application.

As a method for dividing a composite material including a brittle material layer and a resin layer that are laminated together, the method according to JP2019-122966A has been proposed.

The method according to JP2019-122966A includes: a resin removing step of applying laser light oscillated from a laser light source such as a $CO_2$ laser light source to the resin layer along a planned division line of the composite material to remove resin that partly forms the resin layer, so that a processed groove is formed along the planned division line; and a brittle material removing step of applying, after the resin removing step, laser light oscillated from an ultrashort pulsed laser light source to the brittle material layer along the planned division line to remove brittle material that partly forms the brittle material layer, so that processed marks are formed along the planned division line, and the processed mark are through holes that penetrate through the brittle material layer.

By the method according to JP2019-122966A, it is possible to divide the composite material without making no cracks appear on end faces of the brittle material layer subjected to the division and without making end faces of the resin layer subjected to the division suffer the serious thermal degradation.

Although the method according to JP2019-122966A can provide a prescribed bending strength to the composite material subjected to the division, provision of an even more sufficient bending strength is desired.

John Lopez, et al., "GLASS CUTTING USING ULTRASHORT PULSED BESSEL BEAMS", [online], October 2015, International Congress on Applications of Lasers & Electro-Optics (ICALEO), [searched on July 17, 2020, the Internet (URL: https://www.researchgate.net/publication/284617626_GLASS_CUTTING_ USING_ULTRASHORT_PULSED_BESSEL_BEAMS) describes a processing technique with ultrashort pulsed laser light in which a filamentation phenomenon caused by the ultrashort pulsed laser light is used, and a multi-focal optical system or a Bessel beam optical system is applied to an ultrashort pulsed laser light source.

Suresh T. Gulati, et al., "Two Point Bending of Thin Glass Substrate", 2011, SID 11 DIGEST, p.652-654describes a two-point bending stress of a thin glass substrate.

[Summary of Invention]

[Technical Problem]

An objective of the present invention, which has been made to solve the problems of prior art as described above, is to provide a composite material that can be provided by a method capable of dividing a composite material without making cracks appear on end faces of its brittle material layer subjected to the division and without making end faces of its resin layer subjected to the division suffer serious thermal degradation and capable of providing the composite material subjected to the division with a sufficient bending strength.

[Solution to Problem]

To solve the problems, the present inventors conducted diligent studies and consequently completed the present invention based on findings that a sufficient bending strength can be provided to a composite material subjected to the division by forming processed marks only on a resin layer side of a brittle material layer.

That is, in order to solve the above problems, the present invention provides a method for dividing a composite material including a brittle material layer and a resin layer that are laminated together, the method comprising: a resin removing step of applying laser light oscillated from a laser light source to the resin layer along a planned division line of the composite material to remove resin that partly forms the resin layer, so that a processed groove is formed along the planned division line; and a brittle material removing step of applying, after the resin removing step, laser light oscillated from an ultrashort pulsed laser light source to the brittle material layer along the planned division line to remove brittle material that partly forms the brittle material layer, so that processed marks are formed along the planned division line, wherein the processed marks formed in the brittle material removing step open on the resin layer side and do not penetrate through the brittle material layer.

In a method for dividing a composite material according to the present invention, laser light oscillated from an ultrashort pulsed laser light source is applied to a brittle material layer in its brittle material removing step to remove brittle material that partly forms the brittle material layer. Thus, no cracks appear on end faces of the brittle material layer subjected to division (the end faces in a direction perpendicular to a thickness direction of the composite material (a laminating direction of the brittle material layer and the resin layer)). Further, in the method for dividing a composite material according to the present invention, before the brittle material removing step, laser light oscillated from a laser light source is applied to the resin layer in its resin removing step to remove resin that partly forms the resin layer. Thus, end faces of the resin layer subjected to the division (the end faces in a direction perpendicular to a thickness direction of the composite material (a laminating direction of the brittle material layer and the resin layer)) do not suffer serious thermal degradation. That is, the method for dividing a composite material according to the present invention can divide a composite material without making no cracks appear on the end faces of its brittle material layer subjected to the division and without making end faces of its resin layer subjected to the division suffer serious thermal degradation.

Further, the method for dividing a composite material according to the present invention makes processed marks formed in the brittle material removing step open on the resin layer side and not penetrate through the brittle material layer. In other words, in the brittle material removing step, the processed marks are formed only on the resin layer side of the brittle material layer. Therefore, as found by the present inventors, the composite material subjected to the division can be provided with a sufficient bending strength.

Note that, in the method for dividing a composite material according to the present invention, the phrase "apply laser light to the resin layer along a planned division line of the composite material" means that the laser light is applied to the resin layer along the planned division line as viewed in a thickness direction of the composite material (a laminating direction of the brittle material layer and the resin layer). In the method for dividing a composite material according to the present invention, the phrase "apply the laser light to the brittle material layer along the planned division line" means that the laser light is applied to the brittle material layer along the planned division line as viewed in the thickness direction of the composite material (the laminating direction of the brittle material layer and the resin layer).

In the method for dividing a composite material according to the present invention, a type of the laser light source used in the resin removing step is not limited to a specific laser light source as long as the laser light source oscillates laser light capable of removing the resin that partly forms the resin layer. However, it is preferable to use a $CO_2$ laser light source or a CO laser light source, which oscillates laser light having a wavelength within an infrared region, in that they can increase a relative moving speed of the laser light with respect to the composite material (processing speed).

In the method for dividing a composite material according to the present invention, the processed marks formed in the brittle material layer removing step may be perforation-like processed marks along the planned division line or may be processed marks that are integrally connected along the planned division line formed by setting a low relative moving speed of the laser light oscillated from the ultrashort pulsed laser light source with respect to the brittle material layer along the planned division line or by setting a high repetition frequency of pulse oscillation of the ultrashort pulsed laser light source.

In the method for dividing a composite material according to the present invention, in a case of a composite material in which its resin layers are laminated on both sides of its brittle material layer, the phrase "open on the resin layer side" means that the processed marks open on any one of resin layer sides on which the resin layers on both sides are formed.

Preferably, in the brittle material removing step of the method for dividing a composite material according to the present invention, a depth of the processed marks is adjusted by adjusting a power of the laser light oscillated from the ultrashort pulsed laser light source and by adjusting a positional relationship between the brittle material layer and a focus of the laser light oscillated from the ultrashort pulsed laser light source.

In the preferable method, the phrase "a positional relationship between the brittle material layer and a focus of the laser light" means a positional relationship in the thickness direction of the composite material. In the preferable method, the phrase "a depth of the processed marks" means a distance between an end of each processed mark on the resin layer side (an opening end of the processed mark) and a bottom portion of the processed mark on the brittle material layer side (an end of the processed mark on an opposite side from the opening end).

By adjusting the power of the laser light as in the preferable method, it is possible to adjust an intensity of energy used for forming the processed marks (for removing the brittle material). By adjusting the positional relationship between the brittle material layer and the focus of the laser light, it is possible to provide a distribution in the thickness direction of the composite material of energy used to form the processed marks along the planned division line. Therefore, the preferable method can remove only brittle material in the brittle material layer on the resin layer side to form the processed marks in the brittle material layer only on the resin layer side, and adjust the depth of the processed marks.

According to findings obtained by the present inventors, as the depth of the processed marks decreases, a sufficient bending strength can be provided to the composite material subjected to the division.

Therefore, in the method for dividing a composite material according to the present invention, preferably, the depth of the processed marks is preferably 90% or less of a thickness of the brittle material layer, more preferably 65% or less of the thickness of the brittle material layer.

Too shallow a depth of the processed marks results in a failure to divide the composite material. For this reason, the depth of the processed marks is preferably 10% or more of the thickness of the brittle material layer.

In the preferable method, the phrase "the depth of the processed marks is 90% or less of a thickness of the brittle material layer, more preferably 65% or less" means that an average value of depths of the processed marks along the planned division line is 90% or less of the thickness of the brittle material layer, more preferably 65% or less.

Preferably, he method for dividing a composite material according to the present invention further comprising a composite material dividing step of, after brittle material removing step, dividing the composite material by application of external force along the planned division line.

By the preferable method, a composite material can be divided reliably.

In the method for dividing a composite material according to the present invention, for example, the thickness of the brittle material layer is 5 $\mu$m or more to 200 $\mu$m or less.

In order to solve the above problems, the present invention also provides a composite material including a brittle material layer and a resin layer that are laminated together, wherein a surface roughness of a first region of the brittle material layer on the resin layer side of at least one end face of the brittle material layer is higher than a surface roughness of a second region of the brittle material layer on an opposite side of the one end face from the resin layer.

The composite material according to the present invention is a composite material subjected to the division (composite material piece) that can be obtained by the method for dividing a composite material according to the present invention stated above. In a case where the composite material according to the present invention by the method for dividing a composite material according to the present invention, a first region on an end face of a brittle material layer of the composite material according to the present invention corresponds to a region where the processed marks are formed, and a second region on the end face of the brittle material layer corresponds to a region where the processed marks are not formed.

In the composite material according to the present invention, the entire end face of the brittle material layer is not the first region, which has a high surface roughness. A region that is a part of the end face on the resin layer side is the first region, and a region that is the rest of the end face is the second region, which has a low surface roughness. Therefore, the composite material has a sufficient bending strength.

Specifically, for example, in the composite material according to the present invention, the surface roughness of the first region is less than 300 nm in terms of arithmetical mean height Sa, and the surface roughness of the second region is less than 12 nm in terms of arithmetical mean height Sa.

The surface roughness of the first region is preferably less than 120 nm in terms of arithmetical mean height Sa, more preferably less than 100 nm, further preferably less than 80 nm, and particularly preferably 50 nm. The surface roughness of the first region is preferably 12 nm or more in terms of arithmetical mean height Sa.

The arithmetical mean height Sa is specified in ISO 25178 and is a parameter that expands arithmetical mean roughness Ra three-dimensionally.

According to findings obtained by the present inventors, as a thickness of the first region having a high surface roughness (a dimension of the first region along a thickness direction of the brittle material layer) decreases, a sufficient bending strength can be provided to the composite material.

Therefore, in the composite material according to the present invention, preferably, a thickness of the first region is 90% or less of a thickness of the brittle material layer, more preferably 65% or less of the thickness of the brittle material layer.

In the preferable configuration, the phrase "a thickness of the first region is 90% or less of the thickness of the brittle material layer, more preferably 65% or less" means that an average value of thicknesses of the first region on an end face of the brittle material layer is 90% or less of the thickness of the brittle material layer, more preferably 65% or less.

For example, in the composite material according to the present invention, the thickness of the brittle material layer is 5 $\mu$m or more to 200 $\mu$m or less.

According to the composite material according to the present invention, it is possible that a bending strength of the composite material when the composite material is bent such that the brittle material layer side is convex is 200 MPa or more.

The phrase "a bending strength of the composite material is 200 MPa or more" means that an average value of bending strengths of a plurality of composite materials in which proportions of thicknesses of their first regions with respect to thicknesses of their brittle material layers are equal to each other is 200 MPa or more.

[Advantageous Effects of Invention]

According to the present invention, a composite material can be divided without making no cracks appear on end faces of its brittle material layer subjected to the division and without making end faces of its resin layer subjected to the division suffer serious thermal degradation, the composite material subjected to the division can be provided with a sufficient bending strength.

[Brief Description of Drawings]

[Figures 1A to 1C] Figures 1A to 1C are explanatory diagrams schematically illustrating a method for dividing a composite material according to a first embodiment of the present invention.

[Figures 2A and 2B] Figures 2A and 2B are explanatory diagrams schematically illustrating the method for dividing a composite material according to the first embodiment of the present invention.

[Figure 3] Figure 3 is an explanatory diagram schematically illustrating an example of a method for forming the processed marks in a brittle material removing step of the method for dividing a composite material according to the first embodiment of the present invention.

[Figure 4] Figure 4 is a sectional view schematically illustrating a configuration of composite material pieces divided into in a composite material dividing step of the dividing method according to the first embodiment of the present invention.

[Figures 5A to 5D] Figures 5A to 5D are explanatory diagrams schematically illustrating a method for dividing a composite material according to a third embodiment of the present invention.

[Figure 6A to 6C] Figures 6A to 6C are diagrams schematically illustrating an outline of a test according to an example 1.

[Figures 7A to 7E] Figures 7A to 7E are diagrams illustrating results of evaluation of bending strengths of brittle material layer pieces according to a reference example.

[Figures 8A to 8C] Figures 8A to 8C are diagrams illustrating results of evaluation of bending strengths of composite material pieces according to the example 1 and a comparative example.

[Description of Embodiments]

<First Embodiment>

A method for dividing a composite material according to a first embodiment of the present invention will be described below referring to the accompanying drawings as appropriate.

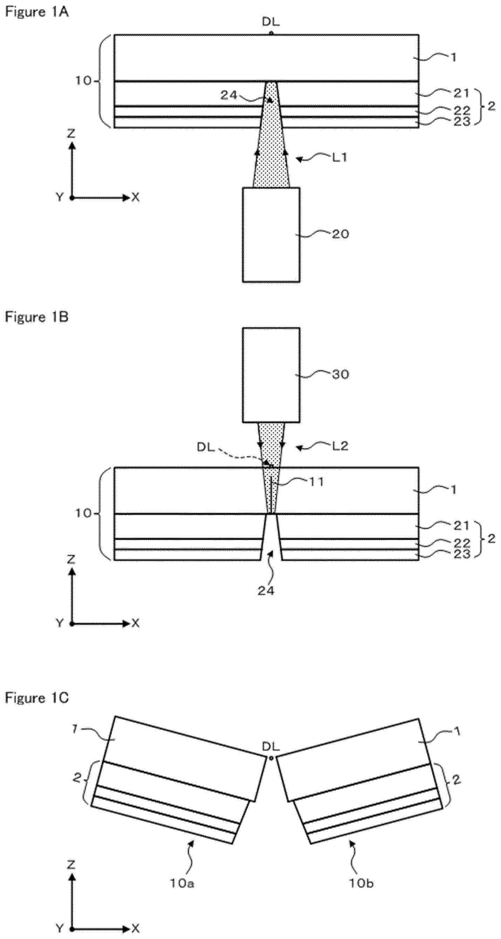

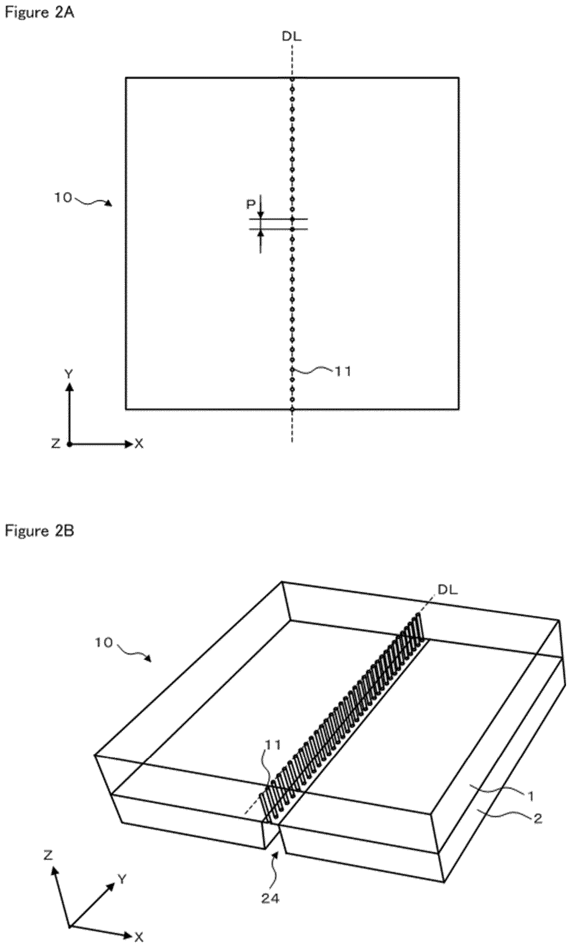

Figures 1A to 1C and Figures 2A and 2B are explanatory diagrams schematically illustrating a method for dividing a composite material according to the first embodiment of the present invention. Figure 1A is a sectional view illustrating a resin removing step of the dividing method according to the first embodiment, Figure 1B is a sectional view illustrating a brittle material removing step of the dividing method according to the first embodiment, and Figure 1C is a sectional view illustrating a composite material dividing step of the dividing method according to the first embodiment. Figure 2A is a plan view illustrating the brittle material removing step of the dividing method according to the first embodiment, and Figure 2B is a perspective view illustrating the brittle material removing step of the dividing method according to the first embodiment. Note that, in Figures 2A and 2B, illustration of an ultrashort pulsed laser light source 30 is omitted.

The dividing method according to the first embodiment is a method of dividing a composite material 10 including a brittle material layer 1 and a resin layer 2 that are laminated together, in a thickness direction (a laminating direction of the brittle material layer 1 and the resin layer 2, an up-down direction in Figures 1A to Figure 1C, a Z direction).

The brittle material layer 1 and the resin layer 2 are laminated together by any suitable method. For example, the brittle material layer 1 and the resin layer 2 can be laminated together by what is called roll-to-roll processing. In other words, the brittle material layer 1 and the resin layer 2 can be laminated together by bonding a longer-length brittle material layer 1 and a longer-length resin layer 2 together with their longitudinal directions aligned with each other while conveying the longer-length brittle material layer 1 and the longer-length resin layer 2 in their longitudinal directions. Alternatively, the brittle material layer 1 and the resin layer 2 can be laminated together after being cut into a prescribed shape. The brittle material layer 1 and the resin layer 2 are laminated together typically with any suitable pressure sensitively adhesive or adhesive (not illustrated) interposed therebetween.

Examples of brittle materials for forming the brittle material layer 1 include glasses and monocrystalline or polycrystalline silicon.

Examples of the glasses include soda-lime glass, borate glass, aluminosilicate glass, quartz glass, and sapphire glass, according to categorization by composition. According to categorization by alkaline component, examples of the glasses include alkali-free glasses and low-alkali glasses. A content of an alkali metal component (e.g., $Na_2O$, $K_2O$, $Li_2O$) of the glasses is preferably 15 wt% or less, further preferably 10 wt% or less.

A thickness of the brittle material layer 1 is preferably 200 $\mu$m or less, more preferably 150 $\mu$m or less, further preferably 120 $\mu$m or less, and particularly preferably 100 $\mu$m or less. On the other hand, the thickness of the brittle material layer 1 is preferably 5 $\mu$m or more, more preferably 20 $\mu$m or more, and further preferably 30 $\mu$m or more. The thickness of the brittle material layer 1 within such a range enables the lamination with the resin layer 2 by the roll-to-roll.

In a case where a brittle material forming the brittle material layer 1 is a glass, the brittle material layer 1 preferably has a light transmittance of 85% or more at a wavelength of 550 nm. In the case where a brittle material forming the brittle material layer 1 is a glass, the brittle material layer 1 preferably has a refractive index of 1.4 to 1.65 at a wavelength of 550 nm. In the case where a brittle material forming the brittle material layer 1 is a glass, the brittle material layer 1 preferably has a density of 2.3 $g/cm^3$ to 3.0 $g/cm^3$, further preferably 2.3 $g/cm^3$ to 2.7 $g/cm^3$.

In the case where a brittle material forming the brittle material layer 1 is a glass, a commercially available sheet glass may be used as it is as the brittle material layer 1 or may be ground to a desired thickness for use, as the brittle material layer 1. Examples of the commercially available sheet glass include "7059", 1737", or "EAGLE2000" from Corning Inc., "AN100" from AGC Inc., "NA-35" from NH Techno Glass Corporation, "OA-10" from Nippon Electric Glass Co., Ltd., and "D263" or "AF45" from SCHOTT AG.

Examples of the resin layer 2 include single-layer films or laminated films constituted by a plurality of layers that are each formed of an acrylic resin such as polyethylene terephthalate (PET), polyethylene (PE), polypropylene (PP), and polymethylmethacrylate (PMMA), or a plastic material such as cyclic olefin polymer (COP), cyclic olefin copolymer (COC), polycarbonate (PC), urethane resin, polyvinyl alcohol (PVA), polyimide (PI), polytetrafluoroethylene (PTFE), polyvinyl chloride (PVC), polystyrene (PS), triacetylcellulose (TAC), polyethylene naphthalate (PEN), ethylene-vinyl acetate (EVA), polyamide (PA), silicone resin, epoxy resin, liquid crystal polymer, and various types of resin foams.

In a case where the resin layer 2 is a laminated film formed of a plurality of layers, one or more of various types of pressure sensitively adhesives such as acrylic pressure sensitively adhesive, urethane pressure sensitively adhesive, and silicone pressure sensitively adhesive, or adhesive may be interposed between the layers.

In addition, a surface of the resin layer 2 may be formed with a conductive inorganic film including indium tin oxide (ITO), Ag, Au, Cu, or the like.

The dividing method according to the first embodiment is suitably used particularly in a case where the resin layer 2 is one of various optical films such as a polarizing film and a retardation film, which are used for a display.

The resin layer 2 preferably has a thickness of 20 to 500 $\mu$m.

The example illustrated in Figures 1A to 1C is an example in which the resin layer 2 is a laminated film in which a polarizing film 21 and a release liner 23 with a pressure sensitively adhesive 22 interposed therebetween.

The dividing method according to the first embodiment includes a resin removing step, a brittle material removing step, and a composite material dividing step. The steps will be described below in order.

[Resin removing step]

As illustrated in Figure 1A, in the resin removing step, laser light L1 oscillated from a laser light source 20 is applied to the resin layer 2 along a planned division line of the composite material 10 to remove resin that partly forms the resin layer 2, thereby forming a processed groove 24 along the planned division line.

The example illustrated in Figures 1A to 1C and Figures 2A and 2B is a case where the planned division line is a straight line DL, which extends in a Y direction out of two directions (an X direction and the Y direction) perpendicular to each other in a plane (in an XY two-dimensional plane) of the composite material 10. The planned division line DL can be actually drawn on the composite material 10, as a visually recognizable display. Alternatively, coordinates of the planned division line DL can be input in advance into a controller (not illustrated) that controls a relative-positional relationship between the laser light L1 and the composite material 10 on the XY two-dimensional plane. The planned division line DL illustrated in Figures 1A to 1C and Figures 2A and 2B is a virtual line, the coordinates of which are input in advance into the controller and which is not actually drawn on the composite material 10. Note that the planned division line DL is not limited to a straight line. The planned division line DL may be a curve. By determining the planned division line DL based on an application of the composite material 10, the composite material 10 can be divided into any shape appropriate for the application.

In the first embodiment, as the laser light source 20, a $CO_2$ laser light source that oscillates the laser light L1 having a wavelength of 9 to 11 $\mu$m, which is within the infrared region.

Note that the present invention is not limited to this. As the laser light source 20, a CO laser light source that oscillates the laser light L1 having a wavelength of 5 $\mu$m can be used.

Alternatively, as the laser light source 20, a visible-light or ultraviolet-light (UV) pulsed laser light source can be used. Examples of the visible-light or UV pulsed laser light source can include a pulsed laser light source that oscillates the laser light L1 having a wavelength of 532 nm, 355 nm, 349 nm, or 266 nm (high harmonics of a solid-state laser light source including Nd:YAG, Nd:YLF, or YVO4 as its medium), an excimer laser light source that oscillates the laser light L1 having a wavelength of 351 nm, 248 nm, 222 nm, 193 nm, or 157 nm, and an F2 laser light source that oscillates the laser light L1 having a wavelength of 157 nm.

Alternatively, as the laser light source 20, a pulsed laser light source that oscillates the laser light L1 having a wavelength outside an ultraviolet region and having a pulse width of the order of femtoseconds or picoseconds can be used. The use of the laser light L1 oscillated from such a pulsed laser light source enables ablation processing based on a multiphoton absorption process to be induced.

Further, as the laser light source 20, a semiconductor laser light source or a fiber laser light source that oscillates the laser light L1 having a wavelength within the infrared region can be used.

As stated above, since a $CO_2$ laser light source is used as the laser light source 20 in the first embodiment, the laser light source 20 will be hereinafter referred to as a "$CO_2$ laser light source 20".

As a conceivable mode of applying the laser light L1 to the composite material 10 along the planned division line of the composite material 10 (a mode of scanning with the laser light L1), it is conceivable, for example, to place and fix (e.g., adsorptively fix) the composite material 10 being sheet-shaped on an XY two-axis stage (not illustrated) and drive the XY two-axis stage based on control signals from the controller to change a relative position of the composite material 10 with respect to the laser light L1 on the XY two-dimensional plane. Alternatively, it is also conceivable to fix a position of the composite material 10 and deflect the laser light L1 oscillated from the $CO_2$ laser light source 20 with a galvanometer mirror or a polygon mirror that is driven by control signals from the controller to change a position of the laser light L1 applied to the composite material 10 on the XY two-dimensional plane. Further, it is possible to combine the scanning of the composite material 10 using the XY two-axis stage and the scanning with the laser light L1 using the galvanometer mirror or the like.

A mode of the oscillation of the $CO_2$ laser light source 20 may be pulse oscillation or may be continuous oscillation. A spatial intensity distribution of the laser light L1 may be a Gaussian distribution or may be shaped into a flat top distribution with a diffractive optical element (not illustrated) or the like so as to prevent damage to the brittle material layer 1, which is not considered to be a target of the removal by the laser light L1. There are no constraints on polarization of the laser light L1. The polarization may be any one of linear polarization, a circular polarization, and random polarization.

The application of the laser light L1 to the resin layer 2 (the laminated film constituted by the polarizing film 21, the pressure sensitively adhesive 22, and the release liner 23) along the planned division line DL of the composite material 10 causes a localized temperature rise incident to infrared light absorption in resin that forms the resin layer 2 and is irradiated with the laser light L1 (parts of the polarizing film 21, the pressure sensitively adhesive 22, and the release liner 23 irradiated with the laser light L1), thereby causing the resin to scatter to be removed from the composite material 10, so that the processed groove 24 is formed in the composite material 10. To prevent debris of the resin removed from the composite material 10 from being reattached to the composite material 10, it is preferable to provide a dust collection mechanism in the vicinity of the planned division line DL. To prevent the processed groove 24 from increasing in groove width, it is preferable to concentrate the laser light L1 such that its spot diameter at an application position on the resin layer 2 is 300 $\mu$m or less, and further preferable to concentrate the laser light L1 such that the spot diameter is 200 $\mu$m or less.

In a case of a method of removing resin on the basis of a localized temperature rise incident to infrared light absorption of resin irradiated with the laser light L1, it is possible to roughly estimate an input energy necessary to form the processed groove 24 from a thickness of the resin layer 2, irrespective of a type of the resin and a layer structure of the resin layer 2. Specifically, the input energy necessary to form the processed groove 24 given by Formula (1) below can be estimated based on the thickness of the resin layer 2 by Formula (2) below.

Input energy [mJ/mm] = Average power of laser light L1 [mW] / Processing speed [mm/sec]    (1)

$$\text{Input energy [mJ/mm]} = 0.5 \times \text{Thickness of resin layer 2 [}\mu\text{m]}$$

$$(2)$$

An actual input energy is preferably set to 20% to 180% of the input energy estimated with Formula (2) above, further preferably 50% to 150%. Providing in this manner the margin to the estimated input energy is due to consideration of the fact that the input energy necessary for forming the processed groove 24 differs by differences in light absorptivity (the light absorptivity at a wavelength of the laser light L1) among resins for forming the resin layer 2 and differences in thermophysical properties such as melting point and decomposition point among the resins. Specifically, a suitable input energy is to be determined by, for example, conducting a preliminary examination in which processed grooves 24 are formed in a resin layer 2 of a prepared sample of a composite material 10 to which the dividing method according to the first embodiment is to be applied, with a plurality of input energies within the preferable range described above.

[Brittle material removing step]

As illustrated in Figure 1B and Figures 2A and 2B, after the resin removing step, in the brittle material removing step, laser light (ultrashort pulsed laser light) L2 that is oscillated (pulse-oscillated) from the ultrashort pulsed laser light source 30 is applied to the brittle material layer 1 along the planned division line DL to remove brittle material that partly forms the brittle material layer 1, thus forming processed marks 11 along the planned division line DL.

As a mode of applying the laser light L2 along the planned division line DL (a mode of scanning with the laser light L2) will not be described in detail because the mode is the same as the mode of applying the laser light L1 stated above along the planned division line DL.

The brittle material that partly forms the brittle material layer 1 is removed by use of filamentation phenomenon caused by the laser light L2 oscillated from the ultrashort pulsed laser light source 30 or by application of a multi-focal optical system (not illustrated) or a Bessel beam optical system (not illustrated) to the ultrashort pulsed laser light source 30.

In the brittle material removing step in the first embodiment, a depth of the processed marks 11 is adjusted by adjusting a power of the laser light L2 oscillated from the ultrashort pulsed laser light source 30 and adjusting a positional relationship between the brittle material layer 1 and a focus of the laser light L2 oscillated from the ultrashort pulsed laser light source 30. This makes the processed marks 11 formed in the brittle material removing step in the first embodiment open on a resin layer 2 side (a processed groove 24 side) and not penetrate through the brittle material layer 1 (not open on an opposite side to the resin layer 2 side). In other words, in the brittle material removing step, the processed marks 11 are formed only on the resin layer 2 side of the brittle material layer 1.

This regard will be described below more specifically.

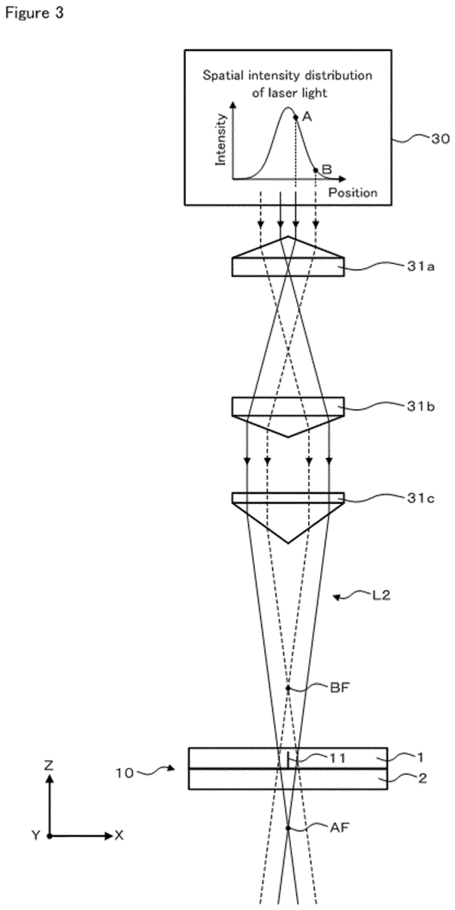

Figure 3 is an explanatory diagram schematically illustrating an example of a method for forming the processed marks 11 in the brittle material removing step of the dividing method according to the first embodiment. Note that, in Figure 3, illustration of the processed groove 24 (see Figures 1A to 1C and Figures 2A and 2B) is omitted.

In the example illustrated in Figure 3, a multi-focal optical system is applied to the ultrashort pulsed laser light source 30. Specifically, the multi-focal optical system illustrated in Figure 3 is constituted by three axicons 31a, 31b, and 31c. As illustrated in Figure 3, when a spatial intensity distribution of the laser light L2 oscillated from the ultrashort pulsed laser light source 30 is assumed to be a Gaussian distribution, the laser light L2 oscillated with a relatively high intensity at a point A follows an optical path drawn in solid line in Figure 3, converging to a focus AF. In contrast, the laser light L2 oscillated with a relatively low intensity at a point B follows an optical path drawn in broken line in Figure 3, converging to a focus BF different from the focus AF. In this manner, the laser light L2 oscillated from the ultrashort pulsed laser light source 30 is made to converge at a plurality of foci by the multi-focal optical system.

As illustrated in Figure 3, the positional relationship between the brittle material layer 1 and the focus of the laser light L2 is adjusted in such a manner that the focus BF of the laser light L2 oscillated with the relatively low intensity at the point B is positioned on the brittle material layer 1 side of the composite material 10, and that the focus AF of the laser light L2 oscillated with the relatively high intensity at the point A is positioned on the resin layer 2 side of the composite material 10, so that it is possible to provide a distribution in a thickness direction of the composite material 10 of energy necessary to form the processed marks 11, specifically a distribution in which energy on the resin layer 2 side is higher than energy on the brittle material layer 1 side. The distribution in the brittle material layer 1 can be changed by adjusting the positional relationship between the brittle material layer 1 and the focus of the laser light L2. In addition, by adjusting the power of the laser light L2 oscillated from the ultrashort pulsed laser light source 30, it is possible to adjust an intensity of energy (magnitudes of intensities at the point A and the point B) used for forming the processed marks 11 (for removing brittle material). This enables removal of only brittle material in the brittle material layer 1 on the resin layer 2 side, formation of the processed marks 11 in the brittle material layer 1 only on the resin layer 2 side, and adjustment of the depth of the processed marks 11.

The use of the filamentation phenomenon caused by ultrashort pulsed laser light and the application of a multi-focal optical system or a Bessel beam optical system to the ultrashort pulsed laser light source are described in John Lopez, et al., "GLASS CUTTING USING ULTRASHORT PULSED BESSEL BEAMS", [online], October 2015, International Congress on Applications of Lasers & Electro-Optics (ICALEO), [searched on July 17, 2020, the Internet (URL: https://www.researchgate.net/publication/284617626_GLASS_CUTTING_ USING_ULTRASHORT_PULSED_BESSEL_BEAMS)stated above. In addition, Trumpf, a German company, sells a product relating to glasswork based on the application of a multi-focal optical system to an ultrashort pulsed laser light source. As described above, the use of the filamentation phenomenon caused by ultrashort pulsed laser light and the application of a multi-focal optical system or a Bessel beam optical system to the ultrashort pulsed laser light source are known, and further description thereof will be herein omitted.

The processed marks 11 formed in the brittle material removing step in the first embodiment are perforation-like processed marks along the planned division line DL. A pitch P (see Figure 2A) of the processed marks 11 is determined based on a repetition frequency pulse oscillation and a relative moving speed (processing speed) of the laser light L2 with respect to the composite material 10. The pitch P of the processed marks 11 is preferably set to 10 μm or less for performing the composite material dividing step described later simply and stably. More preferably, the pitch P of the processed marks 11 is set to 5 μm or less. The processed marks 11 are often formed to have a diameter of 5 μm or less.

The depth of the processed marks 11 is preferably set to 90% or less or 80% or less of the thickness of the brittle material layer 1, more preferably set to 70% or less or 60% or less of the thickness of the brittle material layer 1, and further preferably set to 50% or less of the thickness of the brittle material layer 1. Too shallow a depth of the processed marks 11 results in a failure to divide the composite material 10 in the composite material dividing step described later. For this reason, the depth of the processed marks 11 is preferably set to 10% or more of the thickness of the brittle material layer 1 and more preferably set to 30% or more of the thickness of the brittle material layer 1.

A wavelength of the laser light L2 oscillated from the ultrashort pulsed laser light source 30 is preferably 500 nm to 2500 nm, which give high light transmittances in a case where the brittle material forming the brittle material layer 1 is a glass. A pulse width of the laser light L2 is preferably 100 picoseconds or less and further preferably 50 picoseconds or less to effectively bring about a nonlinear optical effect (multiphoton absorption). A mode of the oscillation of the laser light L2 may be single-pulse oscillation or may be multi-pulse oscillation in a burst mode.

In the brittle material removing step in the first embodiment, the laser light L2 oscillated from the ultrashort pulsed laser light source 30 is applied to the brittle material layer 1 from an opposite side of the brittle material layer 1 from the processed groove 24 formed in the resin removing step. In the example illustrated in Figures 1A and 1B, the $CO_2$ laser light source 20 is disposed on a lower side of the composite material 10 in the Z direction so as to face the resin layer 2, and the ultrashort pulsed laser light source 30 is disposed on an upper side of the composite material 10 in the Z direction so as to face the brittle material layer 1. The laser light L1 oscillated from the $CO_2$ laser light source 20 is used to form the processed groove 24 in the resin removing step, the oscillation of the laser light L1 is then stopped, and the laser light L2 oscillated from the ultrashort pulsed laser light source 30 is used to form the processed marks 11 in the brittle material removing step.

However, the present invention is not limited to this. An adoptable method is a method in which the $CO_2$ laser light source 20 and the ultrashort pulsed laser light source 30 are both disposed on the same side (the upper side or the lower side in the Z direction) of the composite material 10, the resin layer 2 is made to face the $CO_2$ laser light source 20 in the resin removing step, and the composite material 10 is vertically flipped in the brittle material removing step so that the brittle material layer 1 faces the ultrashort pulsed laser light source 30.

The application of the laser light L2 oscillated from the ultrashort pulsed laser light source 30 from the opposite side from the processed groove 24 enables, even when remnants of resin are left at a bottom portion of the processed groove 24, suitable processed marks 11 can be formed in the brittle material layer 1 with no influence of the remnants.

However, the present invention is not limited to this. A cleaning step of, before the brittle material removing step, cleaning the processed groove 24 formed in the resin removing step to remove remnants of resin that partly forms the resin layer 2 may be further included. In addition, in the brittle material removing step, the laser light L2 oscillated from the ultrashort pulsed laser light source 30 can be applied to the brittle material layer 1 from the processed groove 24 side to form the processed marks 11.

For the cleaning step, various wet and dry cleaning methods are applicable. Examples of the wet cleaning methods include chemical immersion, ultrasonic cleaning, dry ice blasting, micro-bubble cleaning, and nano-fine-bubble cleaning. For the dry cleaning methods, laser light, plasma, ultraviolet light, ozone, and the like are available.

Since the remnants of resin that partly forms the resin layer 2 are removed in the cleaning step, even when the laser light L2 oscillated from the ultrashort pulsed laser light source 30 is applied to the brittle material layer 1 from the processed groove 24 side in the brittle material removing step, the laser light L2 can form suitable processed marks 11 in the brittle material layer 1 with no influence of the remnants of the resin.

[Composite material dividing step]

As illustrated in Figure 1C, after the brittle material removing step, in the composite material dividing step, the composite material 10 is divided by application of external force along the planned division line DL. In the example illustrated in Figure 1C, the composite material 10 is divided into composite material pieces 10a and 10b.

Examples of a method of applying the external force to the composite material 10 include mechanical breakage (making a mountain fold), heating a region on and in the vicinity of the planned division line DL with infrared-region laser light, applying vibration with an ultrasound roller, and suctioning and pulling up with a suction cup. In a case where the composite material 10 is divided by making a mountain fold, the external force is preferably applied in such a manner that the resin layer 2 side becomes convex (the brittle material layer 1 side becomes concave) so that the division starts from the resin layer 2 side of the brittle material layer 1 on which the processed marks 11 are formed.

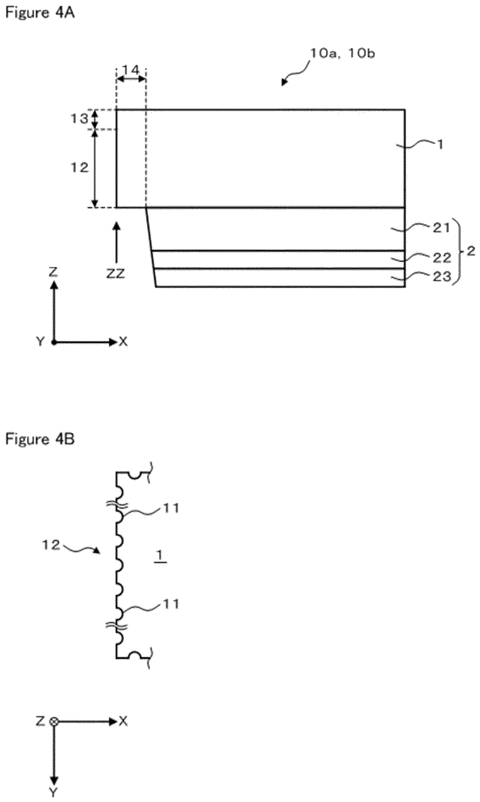

Figure 4 is a sectional view schematically illustrating a configuration of the composite material pieces 10a and 10b divided into in the composite material dividing step of the dividing method according to the first embodiment. Figure 4A is a sectional view illustrating a general configuration of the composite material pieces 10a and 10b, and Figure 4B is an enlarged view illustrating a first region 12 on an end face of the brittle material layer 1 as viewed in a direction of an arrow ZZ in Figure 4A.

As illustrated in Figures 4A and 4B, in the composite material pieces 10a and 10b, a surface roughness of the first region 12 of the brittle material layer 1 on the resin layer 2 side of one end face (the end face formed by the division) of the brittle material layer 1 is higher than a surface roughness of a second region 13 of the brittle material layer 1 on an opposite side of the one end face from the resin layer 2. The first region 12 corresponds to a region where the processed marks 11 are formed, and the second region 13 corresponds to a region where the processed marks 11 are not formed. Therefore, a thickness of the first region 12 (a dimension of the first region 12 along the thickness direction of the brittle material layer 1 (the Z direction)) is preferably 90% or less or 80% or less of the thickness of the brittle material layer 1, more preferably 70% or less or 60% or less of the thickness of the brittle material layer 1, and further preferably 50% or less of the thickness of the brittle material layer 1. The thickness of the first region 12 is preferably 10% or more of the thickness of the brittle material layer 1 and more preferably 30% or more of the thickness of the brittle material layer 1.

The one end face (end face formed by the division) of the brittle material layer 1 of each of the composite material pieces 10a and 10b protrudes from an end face (end face formed by the division) of the resin layer 2 on the same side toward the one end face (to the left of the paper of Figure 4A). A projection amount 14 of the protrusion changes based on the spot diameter of the laser light L1 oscillated from the $CO_2$ laser light source 20 at the application position on the resin layer 2. The projection amount 14 is, for example, 200 $\mu$m or less, 100 $\mu$m or less, or 50 $\mu$m or less. The smaller a lower limit of the projection amount 14, the more preferable it is. For example, the lower limit is 1 $\mu$m or more or 5 $\mu$m or more.

In the dividing method according to the first embodiment described above, the resin that partly forms the resin layer 2 is removed in the resin removing step to form the processed groove 24 along the planned division line DL, and then brittle material that partly forms the brittle material layer 1 is removed in the brittle material removing step to form the processed marks 11 along the same planned division line DL. The processed marks 11 formed in the brittle material removing step are perforation-like processed marks along the planned division line DL, and the pitch P of the processed marks 11 are as small as 10 $\mu$m or less, thus making it relatively easy to divide the composite material 10 by applying the external force along the planned division line DL in the composite material dividing step.

In the dividing method according to the first embodiment, the laser light L2 oscillated from the ultrashort pulsed laser light source 30 is applied to the brittle material layer 1 in the brittle material removing step to remove the brittle material that partly forms the brittle material layer 1. Thus, no cracks appear on end faces of the brittle material layer 1 subjected to the division. In the dividing method according to the first embodiment, in the resin removing step, the laser light L1 oscillated from the $CO_2$ laser light source 20 is applied to the resin layer 2 to remove the resin that partly forms the resin layer 2 before the brittle material removing step. Thus, end faces of the resin layer 2 subjected to the division do not suffer serious thermal degradation. That is, the dividing method according to the first embodiment can divide the composite material 10 without making no cracks appear on the end faces of the brittle material layer 1 subjected to the division and without making the end faces of the resin layer 2 subjected to the division suffer the serious thermal degradation.

Further, the dividing method according to the first embodiment makes the processed marks 11 formed in the brittle material removing step open on the resin layer 2 side and not penetrate through the brittle material layer 1. In other words, in the brittle material removing step, the processed marks 11 are formed only on the resin layer 2 side of the brittle material layer 1. Therefore, the composite material pieces 10a and 10b divided into can be provided with a sufficient bending strength.

<Second Embodiment>

In the dividing method according to the first embodiment stated above, the processed marks 11 formed in the brittle material removing step are perforation-like processed marks.

In contrast, in a dividing method according to a second embodiment, in its brittle material removing step, processed marks that are integrally connected along a planned division line DL are formed by setting a low relative moving speed of laser light L2 oscillated from an ultrashort pulsed laser light source 30 with respect to the brittle material layer 1 along the planned division line DL or by setting a high repetition frequency of pulse oscillation of the ultrashort pulsed laser light source 30. The dividing method according to the second embodiment forms the integrally connected processed marks and is thus advantageous in that the dividing method enables a composite material 10 to be divided even more easily than the dividing method according to the first embodiment.

The dividing method according to the second embodiment is the same as the dividing method according to the first embodiment except that the formed processed marks are integrally connected, and thus will not be described in detail.

The dividing method according to the second embodiment can also divide the composite material 10 without making no cracks appear on end faces of a brittle material layer 1 subjected to the division and without making end faces of a resin layer 2 subjected to the division suffer serious thermal degradation, and can provide composite material pieces divided into with a sufficient bending strength.

<Third Embodiment>

In the first embodiment and the second embodiment stated above, the method of dividing the composite material 10, in which one brittle material layer 1 and one resin layer 2 are laminated together, in the thickness direction is described. However, the present invention is not limited to this and applicable to a case where a composite material in which resin layers are laminated on both sides of a brittle material layer is divided in its thickness direction.

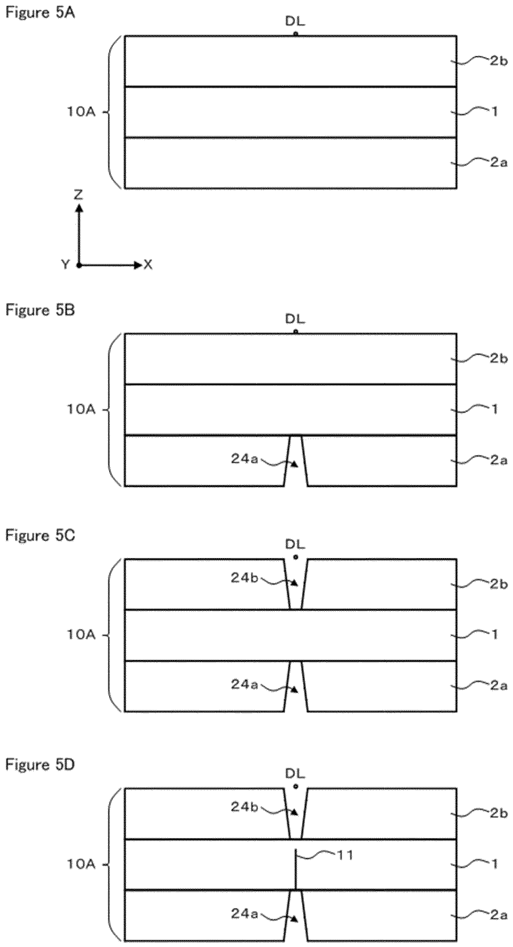

Figures 5A to 5D are explanatory diagrams (sectional views) schematically illustrating a procedure of a method for dividing a composite material according to the third embodiment of the present invention. Note that, in Figures 5A to 5D, illustration of a $CO_2$ laser light source 20 and laser light L1, and an ultrashort pulsed laser light source 30 and laser light L2 is omitted. Further, in Figures 5A to 5D, illustration of a composite material dividing step is omitted.

As illustrated in Figure 5A, the dividing method according to the third embodiment is a method for dividing a composite material 10A, in which resin layers 2a and 2b are laminated on both sides of a brittle material layer 1, in its thickness direction (the Z direction). A method for laminating the brittle material layer 1 and the resin layers 2a and 2b together, materials for forming the brittle material layer 1 and the resin layers 2a and 2b, and the like are the same as those in the first embodiment and thus will not be described in detail.

As with the dividing method according to the first embodiment, the dividing method according to the third embodiment includes a resin removing step, a brittle material removing step, and a composite material dividing step. Each step will be described below mainly about differences from the first embodiment.

[Resin removing step]

As illustrated in Figures 5B and 5C, in the resin removing step, as in the first embodiment, the laser light L1 oscillated from the $CO_2$ laser light source 20 is applied to the resin layers along a planned division line DL of the composite material 10A to remove resin that partly forms the resin layers, thereby forming processed grooves along the planned division line DL. Note that, since the resin layers 2a and 2b are laminated on both sides of the brittle material layer 1 in the third embodiment, a processed groove 24a is formed in the resin layer 2a, which is one of the resin layers, as illustrated in Figure 5B, and a processed groove 24b is formed in the resin layer 2b, which is the other of the resin layers, as illustrated in Figure 5C. In the example illustrated in Figures 5B and 5C, the processed groove 24a on a lower side in the Z direction is first formed, and then the processed groove 24b on an upper side in the Z direction is formed, and naturally, the order of the formation can be reversed.

For example, with pair of $CO_2$ laser light sources 20 disposed on a side facing the resin layer 2a and a side facing resin layer 2b, the processed groove 24a can be formed in the resin layer 2a with the $CO_2$ laser light source 20 disposed on the side facing the resin layer 2a, and the processed groove 24b can be formed in the resin layer 2b with the $CO_2$ laser light source 20 disposed on the side facing the resin layer 2b. In this case, it is possible to form the processed groove 24a and the processed groove 24b at the same time rather than forming the processed groove 24a and the processed groove 24b in turn.

Alternatively, with a single $CO_2$ laser light source 20 disposed on a side facing any one of the resin layer 2a and the resin layer 2b, it is possible to form the processed groove 24a in the resin layer 2a (or form the processed groove 24b in the resin layer 2b), which is the one, with the $CO_2$ laser light source 20, then vertically flip the composite material 10A, and form the processed groove 24b in the resin layer 2b (or form the processed groove 24a in the resin layer 2a), which is the other, with the same $CO_2$ laser light source 20.

[Brittle material removing step]

As illustrated in Figure 5D, in the brittle material removing step, as in the first embodiment, after the resin removing step, the laser light L2 that is oscillated from the ultrashort pulsed laser light source 30 is applied to the brittle material layer 1 along the planned division line DL to remove brittle material that partly forms the brittle material layer 1, thus forming processed marks 11 along the planned division line DL. As in the first embodiment, the processed marks 11 formed in the brittle material removing step are perforation-like processed marks along the planned division line DL, and a pitch of the processed marks is preferably set to 10 $\mu$m or less. Note that, as in the second embodiment, in the brittle material removing step, processed marks that are integrally connected along the planned division line DL can be formed in the brittle material removing step.

In the third embodiment, the processed grooves 24a and 24b are formed on both sides of the brittle material layer 1. Thus, the processed marks 11 are formed by applying the laser light L2 oscillated from the ultrashort pulsed laser light source 30 to the brittle material layer 1 from any one of processed groove sides on which the processed grooves 24a and 24b are formed. For this reason, for example, in a case where the laser light L2 is applied from a processed groove 24a side, it is preferable to further include a cleaning step of, before the brittle material removing step, cleaning the processed groove 24a to remove remnants of resin that partly forms the resin layer 2a. Similarly, in a case where the laser light L2 is applied from a processed groove 24b side, it is preferable to further include a cleaning step of, before the brittle material removing step, cleaning the processed groove 24b to remove remnants of resin that partly forms the resin layer 2b.

The processed marks 11 in the example illustrated in Figure 5D open on a resin layer 2a side and do not penetrate through the brittle material layer 1. However, the present invention is not limited to this. It is possible to form processed marks that open on a resin layer 2b side and do not penetrate through the brittle material layer 1.

[Composite material dividing step]

As in the first embodiment, after the brittle material removing step, in the composite material dividing step, the composite material 10A is divided by application of external force along the planned division line DL. In a case where the composite material 10A is divided by making a mountain fold, in the example illustrated in Figure 5D, the external force is preferably applied in such a manner that the resin layer 2a side becomes convex (a brittle material layer 1 side becomes concave) so that the division starts from the resin layer 2a side of the brittle material layer 1 on which the processed marks 11 are formed.

The dividing method according to the third embodiment can also divide the composite material 10A without making cracks appear on end faces of a brittle material layer 1 subjected to the division and without making end faces of resin layers 2a and 2b subjected to the division suffer serious thermal degradation, and can provide a sufficient bending strength to composite material pieces divided into.

Description will be given below of an example of results of conducting a test in which composite materials 10 were divided by the dividing methods according to the first embodiment (examples 1 to 3) and by a dividing method according to a comparative example will be described below. In addition, as a reference example, description will also be given of an example of results of conducting a test in which only a brittle material layer 1 was prepared rather than a composite material 10, processed marks 11 were formed in the same brittle material removing step as in the dividing method according to the first embodiment, and the brittle material layer 1 was divided.

<Example 1>

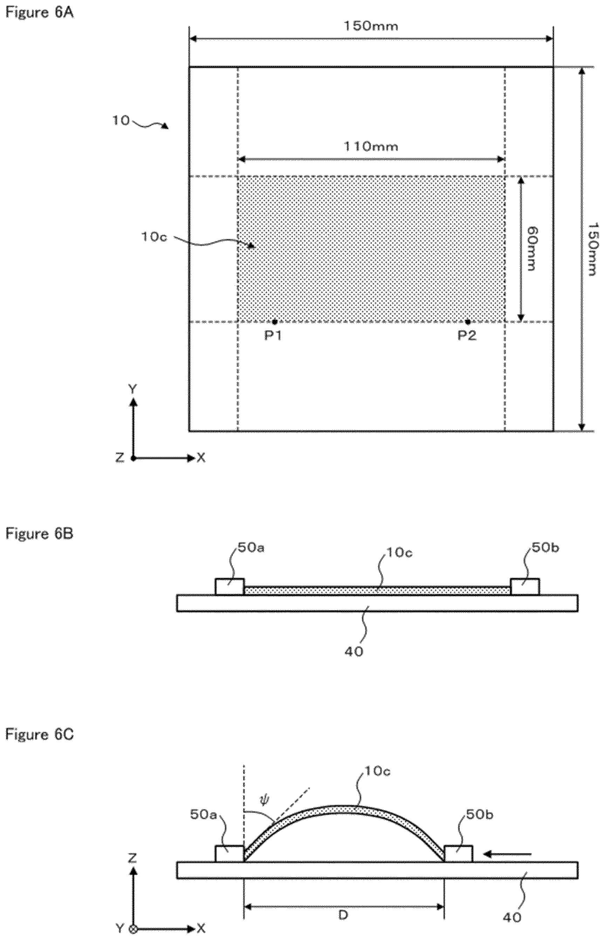

Figures 6A to 6C are diagrams schematically illustrating an outline of a test according to the example 1. Referring to Figures 1A to 1C and Figures 6A to 6C as appropriate, the outline and the results of the test according to the example 1 will be described.

The composite material 10 used in the example 1 includes a brittle material layer 1 that is formed of an alkali-free glass and has a thickness of 100 $\mu$m. The composite material 10 includes a resin layer 2 that is formed of a polarizing film (formed of polyvinyl alcohol) 21, a pressure sensitively adhesive 22, and a release liner 23. A total thickness of the polarizing film 21 and the pressure sensitively adhesive 22 is 80 $\mu$m, and a thickness of the release liner 23 is 40 $\mu$m (a total thickness of the resin layer 2 is 120 $\mu$m). As illustrated in Figure 6A, the composite material 10 is 150 mm $\times$ 150 mm square as in-plane (in an XY two-dimensional plane) dimensions. Straight lines drawn in broken line in Figure 6A are planned division lines.

In the example 1, in the resin removing step, "E-400i" from Coherent, Inc. (oscillation wavelength: 9.4 $\mu$m, repetition frequency of pulse oscillation: 25 kHz, power of laser light L1: 18 W, Gaussian beam) was used as a $CO_2$ laser light source 20, and laser light L1 oscillated from the $CO_2$ laser light source 20 was caused to concentrate to have a spot diameter of 120 $\mu$m with a condensing lens and applied to the resin layer 2 of the composite material 10. With a relative moving speed of the laser light L1 with respect to the composite material 10 (processing speed) set to 400 mm/sec, the laser light L1 was scanned with along the planned division lines so that a composite material piece 10c having in-plane dimensions of 110 mm $\times$ 60 mm can be divided into as illustrated in Figure 6A. As a result, processed grooves 24 having a groove width of 150 $\mu$m (see Figures 1A to 1C) were formed.

In the resin removing step in the example 1, an input energy that is estimated by Formula (2) stated above was 60 mJ/mm. In contrast, an actual input energy was 45 mJ/mm according to Formula (1) stated above, which was 75% of the estimated input energy.

Subsequently, in the brittle material removing step, "Monaco 1035-80-60" from Coherent, Inc. (oscillation wavelength: 1035 nm, pulse width of laser light L2: 350 to 10000 femtoseconds, repetition frequency of pulse oscillation 50 MHz at maximum, average power: 60 W) was used as an ultrashort pulsed laser light source 30, and laser light L2 oscillated from the ultrashort pulsed laser light source 30 with a predetermined output was applied via a multi-focal optical system to the brittle material layer 1 of the composite material 10 from an opposite side from the processed groove 24 (brittle material layer 1 side). With a relative moving speed of the laser light L2 with respect to the composite material 10 (processing speed) set to 1200 mm/sec and the repetition frequency set to 1 MHz, the laser light L2 was scanned with along the planned division lines. As a result, perforation-like processed marks (each having a diameter of about 1 $\mu$m) having a depth (average value) of 80 $\mu$m at a pitch of 1.2 $\mu$m were formed as processed marks 11.

Finally, in the composite material dividing step, mountain folds were made on the composite material 10 along the planned division line by hand, and the composite material piece 10c was thereby divided into.

End faces of the composite material piece 10c obtained by the example 1 described above were observed and evaluated in quality with an optical microscope. As a result, there were no cracks appearing in the brittle material layer 1 on all four end faces. Discolored regions caused by thermal degradation of the resin layer 2 extended inward from the end faces by 100 $\mu$m or less. Therefore, the end faces did not suffer serious thermal degradation.

Surface roughnesses of one of the end faces of the composite material piece 10c were measured at two spots (as illustrated in Figure 6A, one of the spots was a measurement point P1 on a one end side in the X direction, and the other was a measurement point P2 on the other end side in the X direction). As a result, an arithmetical mean height Sa of a first region corresponding to a region where the processed marks 11 were formed was 31 nm at the measurement point P1 and 34 nm at the measurement point P2. An arithmetical mean height Sa of a second region corresponding to a region where the processed marks 11 were not formed was 0 nm at both the measurement points P1 and P2.

Note that the arithmetical mean heights Sa were measured in conformity with an evaluation method according to "non-contact (optical probe)" specified in ISO 25178. Specifically, "LEXT OLS5000", a 3D measuring laser microscope from Olympus Corporation, was used, with its in-plane resolution on the end face set to 100 nm and its height resolution in a direction perpendicular to the one face set to 12 nm, and an arithmetical mean height Sa was measured in a 130 $\mu$m $\times$ 100 $\mu$m in-plain region at each of the measurement points P1 and P2. This applies to the examples 2 and 3 described later.

Additionally, the composite material piece 10c was subjected to a two-point bending test. In the two-point bending test, as illustrated in Figure 6B, first, the composite material piece 10c was placed on a fixing part 40 of a uniaxial stage that includes the fixing part 40 and movable parts 50a and 50b and sandwiched between the movable parts 50a and 50b. At this time, the composite material piece 10c was placed on the fixing part 40 such that movement of the movable part 50b bends the composite material piece 10c with a brittle material layer side being convex (i.e., the brittle material layer 1 side is on an upper side of the composite material piece 10c), as will be described later. Subsequently, as illustrated in Figure 6C, with a position of the movable part 50a being fixed, the movable part 50b was moved toward the movable part 50a at a speed of 20 mm/min, thereby causing bending stress to act in composite material piece 10c. Then, a bending strength of the composite material piece 10c was evaluated based on a value of a distance D between the movable part 50a and the movable part 50b at the time when the composite material piece 10c was broken.

Specifically, the distance D was substituted into Formula (3) described in Suresh T. Gulati, et al., "Two Point Bending of Thin Glass Substrate", 2011, SID 11 DIGEST, p.652-654 (the same formula as Formula (3) below) to calculate a maximum stress $\sigma_{max}$, which was evaluated as the bending strength.

[Expression 1]

$$\sigma_{max} = 1.198 \left( \frac{Et}{D-t} \right) (\cos \psi)^{1/2} \quad \cdots (3)$$

In Formula (3) above, E denotes a Young's modulus of the composite material piece 10c, t denotes a thickness of the composite material piece 10c, $\psi$ denotes an angle formed by a tangent line of the composite material piece 10c at its end and a vertical direction (the Z direction).

As the Young's modulus E of the composite material piece 10c, a Young's modulus of the brittle material layer 1, 70 GPa, was used. This is because a Young's modulus of the resin layer 2 is sufficiently small compared with the Young's modulus of the brittle material layer 1, and thus the Young's modulus of the brittle material layer 1 is dominant in the Young's modulus E of the composite material piece 10c.

The angle $\psi$ was calculated based on a captured image immediately before the breakage of the composite material piece 10c that was obtained by imaging the composite material piece 10c in the Y direction illustrated in Figure 6C in such a manner that one end of the composite material piece 10c is positioned within a visual field while the two-point bending test was conducted.

Here, as the reference example, the test was conducted in which only a brittle material layer 1 was prepared, processed marks 11 were formed in the brittle material removing step under the same conditions as in the example 1, and the brittle material layer 1 was divided. Subsequently, the same two-point bending test as illustrated in Figures 6A to 6C was conducted on the brittle material layer 1 subjected to the division (a brittle material layer piece), and a bending strength (maximum stress $\sigma_{max}$) of the brittle material layer 1 was evaluated with Formula (3) stated above. As a Young's modulus E of the brittle material layer 1, 70 GPa was used.

In the reference example, a depth of the processed marks 11 was adjusted by adjusting a positional relationship between the brittle material layer 1 and a focus of the laser light L2 oscillated from the ultrashort pulsed laser light source 30. Ten brittle material layers 1 were fabricated for each of four types of brittle material layer 1: 40%, 60%, 70%, and 80% of the thickness of the brittle material layer 1 in depths of their processed marks 11 (average values). For each of the types of brittle material layer pieces divided into, its bending strength was evaluated.

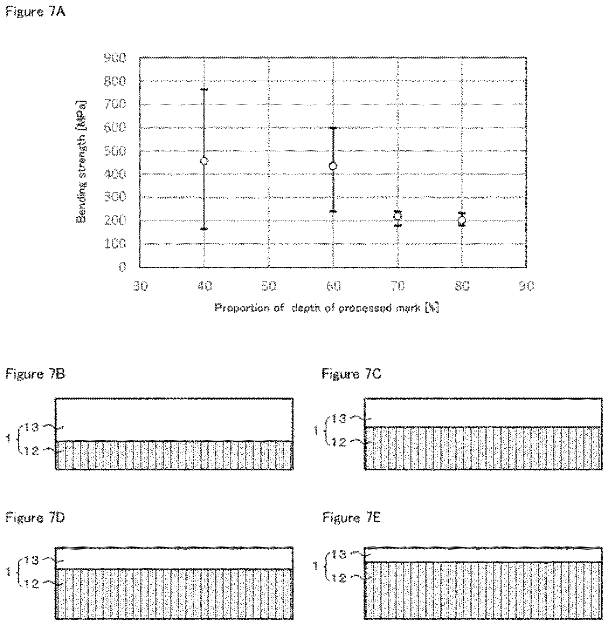

Figures 7A to 7E are diagrams illustrating results of the evaluation of bending strengths of the brittle material layer pieces according to the reference example. Figure 7A is a graph illustrating a relationship between proportions of the depths of the processed marks 11 (the proportions to the thickness of the brittle material layer 1) and the bending strengths of the brittle material layer pieces. In Figure 7A, data items plotted with "○" are each an average value for ten brittle material layer pieces, and vertical lines extending upward and downward from "○" each indicate a variation in measurement value. Figure 7B schematically illustrates an observed image of an end face of a brittle material layer piece in which the proportion of the depth of the processed marks 11 (a proportion of a thickness of its first region 12) was 40%, with an optical microscope. Figure 7C schematically illustrates an observed image of an end face of a brittle material layer piece in which the proportion of the depth of the processed marks 11 (a proportion of a thickness of its first region 12) was 60%, with an optical microscope. Figure 7D schematically illustrates an observed image of an end face of a brittle material layer piece in which the proportion of the depth of the processed marks 11 (a proportion of a thickness of its first region 12) was 70%, with an optical microscope. Figure 7E schematically illustrates an observed image of an end face of a brittle material layer piece in which the proportion of the depth of the processed marks 11 (a proportion of a thickness of its first region 12) was 80%, with an optical microscope.

As illustrated in Figures 7A to 7E, in cases where the proportion of the depth of the processed marks 11 was 90% or less (the proportion of the depth of the processed marks 11 was 40% to 80% in the example illustrated in Figures 7A to 7E), the average value of bending strengths of the brittle material layer pieces divided into was 200 MPa or more, and thus high bending strengths could be provided. In addition, as the proportion of the depth of the processed marks 11 decreases (the depth of the processed marks 11 decreases), higher bending strengths could be provided to the brittle material layer pieces divided into. In particular, when the proportion of the depth of the processed marks 11 was 65% or less (the proportion of the depth of the processed marks 11 was 60% or less in the example illustrated in Figures 7A to 7E), the average value of bending strengths of the brittle material layer pieces divided into were 300 MPa or more, even 400 MPa or more, and thus sufficiently high bending strengths could be provided. Although the results illustrated in Figures 7A to 7E show the bending strengths of the brittle material layer pieces, it can be expected that similar results will be obtained from the composite material piece 10c in the example 1.

<Comparative Example>

The test was conducted under the same conditions as in the example 1 except that processed marks were formed so as to penetrate through the brittle material layer 1 (i.e., a proportion of a depth of the processed marks was 100%) in the brittle material removing step. Then, a composite material piece was divided into. End faces of the composite material piece were observed and evaluated in quality with an optical microscope. As a result, there were no cracks appearing in the brittle material layer 1 on all four end faces as in the example 1. Discolored regions caused by thermal degradation of the resin layer 2 extended inward from the end faces by 100 μm or less. Therefore, the end faces did not suffer serious thermal degradation.

However, as results of conducting the two-point bending test on a composite material piece in the comparative example, a bending strength of the composite material piece was lower than the bending strength of the composite material piece 10c in the example 1.

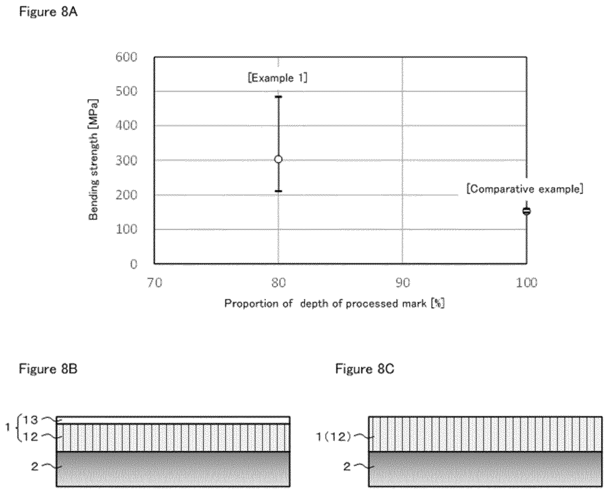

Figures 8A to 8C are diagrams illustrating results of evaluation of bending strengths of the composite material piece 10c according to the example 1 and the composite material piece according to the comparative example. Figure 8A is a graph illustrating a relationship between proportions of the depths of the processed marks 11 (the proportions to the thickness of the brittle material layer 1) and the bending strengths of the composite material pieces. In Figure 8A, data items plotted with "○" are an average value for eight composite material pieces according to the example 1 and an average value for ten composite material pieces according to the comparative example. Vertical lines extending upward and downward from "○" each indicate a variation in measurement value. Figure 8B schematically illustrates an observed image of an end face of the composite material piece 10c according to the example 1 in which the proportion of the depth of the processed marks 11 (a proportion of a thickness of its first region 12) was 80%, with an optical microscope. Figure 8C schematically illustrates an observed image of an end face of the composite material piece according to the comparative example in which the proportion of the depth of the processed marks 11 (a proportion of a thickness of its first region 12) was 100%, under an optical microscope.

As illustrated in Figures 8A to 8C, in the case of the example 1, in which the processed marks 11 did not penetrate through, a bending strength in terms of an average value for composite material pieces divided into, as high as 200 MPa or more, even 250 MPa or more, could be provided compared with the comparative example, in which the processed marks 11 penetrated through the brittle material layer 1.

<Example 2>

The test was conducted under the same conditions as in the example 1 except that an output of the laser light L2 oscillated from the ultrashort pulsed laser light source 30 was set to be higher than that in the example 1 as a condition of the brittle material removing step. Then, the resultant composite material piece was divided into.
Surface roughnesses of one of end faces of a composite material piece obtained by the example 2 were measured at two spots (the same measurement points P1 and P2 as in the example 1). As a result, one of arithmetical mean heights Sa of its first region corresponding to a region where the processed marks 11 were formed was 103 nm, which was the smaller of the surface roughness at the two spots, and an arithmetical mean heights Sa of its second region corresponding to a region where the processed marks 11 were not formed, were both 0 nm at the two spots.

<Example 3>

The test was conducted under the same conditions as in the example 1 except that the output of the laser light L2 oscillated from the ultrashort pulsed laser light source 30 was set to be even higher than that in the example 2 as a condition of the brittle material removing step. Then, the resultant composite material piece was divided into.
Surface roughnesses of one of end faces of a composite material piece obtained by an example 3 were measured at two spots (the same measurement points P1 and P2 as in the example 1). As a result, one of arithmetical mean heights Sa of its first region corresponding to a region where the processed marks 11 were formed was 222 nm, which was the smaller of the surface roughness at the two spots, and an arithmetical mean heights Sa of its second region corresponding to a region where the processed marks 11 were not formed, were both 0 nm at the two spots.
The following items define preferred embodiments of the invention.

Item 1. A method for dividing a composite material including a brittle material layer and a resin layer that are laminated together, the method comprising:

a resin removing step of applying laser light oscillated from a laser light source to the resin layer along a planned division line of the composite material to remove resin that partly forms the resin layer, so that a processed groove is formed along the planned division line; and
a brittle material removing step of applying, after the resin removing step, laser light oscillated from an ultrashort pulsed laser light source to the brittle material layer along the planned division line to remove brittle material that partly forms the brittle material layer, so that processed marks are formed along the planned division line, wherein the processed marks formed in the brittle material removing step open on the resin layer side and do not penetrate through the brittle material layer.

Item 2. The method for dividing a composite material according to item 1, wherein in the brittle material removing step, a depth of the processed marks is adjusted by adjusting a power of the laser light oscillated from the ultrashort pulsed laser light source and by adjusting a positional relationship between the brittle material layer and a focus of the laser light oscillated from the ultrashort pulsed laser light source.
Item 3. The method for dividing a composite material according to item 1 or 2, wherein the depth of the processed marks is 90% or less of a thickness of the brittle material layer.
Item 4. The method for dividing a composite material according to item 3, wherein the depth of the processed marks is 65% or less of the thickness of the brittle material layer.
Item 5. The method for dividing a composite material according to any one of items 1 to 4, further comprising a composite material dividing step of, after brittle material removing step, dividing the composite material by application of external force along the planned division line.
Item 6. The method for dividing a composite material according to any one of items 1 to 5, wherein the thickness of the brittle material layer is 5 μm or more to 200 μm or less.
Item 7. A composite material including a brittle material layer and a resin layer that are laminated together, wherein a surface roughness of a first region of the brittle material layer on the resin layer side of at least one end face of the brittle material layer is higher than a surface roughness of a second region of the brittle material layer on an opposite side of the one end face from the resin layer.
Item 8. The composite material according to item 7, wherein

the surface roughness of the first region is less than 300 nm in terms of arithmetical mean height Sa, and
the surface roughness of the second region is less than 12 nm in terms of arithmetical mean height Sa.

Item 9. The composite material according to item 7 or 8, wherein a thickness of the first region is 90% or less of a thickness of the brittle material layer.

Item 10. The composite material according to item 9, wherein the thickness of the first region is 65% or less of the thickness of the brittle material layer.

Item 11. The composite material according to any one of items 7 to 10, wherein the thickness of the brittle material layer is 5 μm or more to 200 μm or less.

Item 12. The composite material according to any one of items 7 to 11, wherein a bending strength of the composite material when the composite material is bent such that the brittle material layer side is convex is 200 MPa or more.

[Reference Signs List]

1      brittle material layer

2      resin layer
10     composite material
11     processed mark
12     first region
13     second region
20     laser light source ($CO_2$ laser light source)
24     processed groove
30     ultrashort pulsed laser light source
DL     planned division line
L1     laser light
L2     laser light

**Claims**

1.  A composite material (10) including a brittle material layer (1) and a resin layer (2) that are laminated together, wherein a surface roughness of a first region of the brittle material layer (1) on the resin layer (2) side of at least one end face of the brittle material layer (1) is higher than a surface roughness of a second region of the brittle material layer (1) on an opposite side of the one end face from the resin layer (2).

2.  The composite material (10) according to claim 1, wherein

    the surface roughness of the first region is less than 300 nm in terms of arithmetical mean height Sa, and
    the surface roughness of the second region is less than 12 nm in terms of arithmetical mean height Sa.

3.  The composite material (10) according to claim 1 or 2, wherein a thickness of the first region is 90% or less of a thickness of the brittle material layer (1).

4.  The composite material (10) according to claim 3, wherein the thickness of the first region is 65% or less of the thickness of the brittle material layer (1).

5.  The composite material (10) according to any one of claims 1 to 4, wherein the thickness of the brittle material layer (1) is 5 μm or more to 200 μm or less.

6.  The composite material (10) according to any one of claims 1 to 5, wherein a bending strength of the composite material (10) when the composite material (10) is bent such that the brittle material layer (1) side is convex is 200 MPa or more.

Figure 1A

Figure 1B

Figure 1C

Figure 2A

Figure 2B

Figure 3

Figure 4A

10a, 10b

14

13

12

1

21
22
23

2

Z

ZZ

Y → X

Figure 4B

12

11

1

11

Z ⊗ → X

Y

Figure 5A

DL

2b

10A

1

2a

Z

Y X

Figure 5B

DL

2b

10A

1

24a

2a

Figure 5C

DL

24b

2b

10A

1

24a

2a

Figure 5D

DL

24b

2b

10A

11

1

24a

2a

Figure 6A

Figure 6B

Figure 6C

Figure 7A

Figure 7B

Figure 7C

Figure 7D

Figure 7E

Figure 8A

Figure 8B

Figure 8C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019122966 A

**Non-patent literature cited in the description**

- **JOHN LOPEZ et al.** GLASS CUTTING USING ULTRASHORT PULSED BESSEL BEAMS. *International Congress on Applications of Lasers & Electro-Optics (ICALEO)*, October 2015, https://www.researchgate.net/publication/284617626_GLASS_-CUTTING_ USING_ULTRASHORT_PULSED_-BESSEL_BEAMS

- **SURESH T. GULATI et al.** Two Point Bending of Thin Glass Substrate. *SID 11 DIGEST*, 2011, 652-654